(19) Europäisches Patentamt / European Patent Office / Office européen des brevets

(11) **EP 3 922 670 B1**

(12) **EUROPEAN PATENT SPECIFICATION**

(45) Date of publication and mention of the grant of the patent:
**26.04.2023 Bulletin 2023/17**

(21) Application number: **21177045.8**

(22) Date of filing: **01.06.2021**

(51) International Patent Classification (IPC):
***C08K 3/36*** *(2006.01)* ***C08L 7/00*** *(2006.01)*
***C08L 9/00*** *(2006.01)* ***C08L 9/06*** *(2006.01)*
***B60C 1/00*** *(2006.01)* ***B60C 11/00*** *(2006.01)*

(52) Cooperative Patent Classification (CPC):
(C-Sets available)
**B60C 1/0016; C08L 9/00; C08L 9/06;**
B60C 2011/0025; C08L 7/00 (Cont.)

(54) **WINTER TIRE**

WINTERREIFEN

PNEU D'HIVER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2020 JP 2020102391**

(43) Date of publication of application:
**15.12.2021 Bulletin 2021/50**

(73) Proprietor: **Sumitomo Rubber Industries, Ltd.**
**Kobe-shi, Hyogo-ken (JP)**

(72) Inventor: **IZUMO, Suguru**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 1 463 763**
**EP-A1- 3 785 928**
**WO-A1-2018/079801**
**US-A1- 2005 148 713**
**US-A1- 2019 308 451**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 922 670 B1

(52) Cooperative Patent Classification (CPC): (Cont.)

C-Sets
C08L 7/00, C08L 9/00, C08L 9/06, C08K 3/36,
C08K 3/04

## Description

### TECHNICAL FIELD

The present invention relates to winter tires.

### BACKGROUND ART

Winter tires are used on snowy or icy roads whose surfaces are less rough and more slippery than normal asphalt or concrete road surfaces. Various developments have been made on such winter tires, including rubber compositions with improved materials and design to provide excellent low-temperature properties. Nevertheless,
further improvement in ice braking performance is desirable to meet the high demand for improved performance (see, for example, Patent Literature 1).

US 2005 / 148 713 A1 is related to a cross-linked rubber composition for use in a tire tread which is particular suitable for travelling on icy, snow-covered or wet ground, wherein the rubber composition comprises a diene rubber.

WO 2018 / 079 801 A1 is related to rubber compositions for tires suitable for snow tires or winter tires, wherein the rubber composition comprises a diene rubber.

US 2019 / 308 451 A1 discloses a tire composition comprising a rubber component comprising a styrene-butadiene rubber.

EP 1 463 763 A1 is related to isobutylene-based terpolymer compositions useful in tires.

EP 3 785 928 A1 is a prior art under Art. 54(3) EPC and discloses studded tires comprising cap tread and base tread comprising a rubber composition containing a styrene-butadiene rubber.

### CITATION LIST

### PATENT LITERATURE

Patent Literature 1: JP 2009-091482 A

### SUMMARY OF INVENTION

### TECHNICAL PROBLEM

The present invention aims to solve the problem and provide winter tires having excellent ice braking performance.

### SOLUTION TO PROBLEM

The present inventor has revealed the frequency input from the icy road surface to the tread rubber during braking on an icy road by using the relationship between the surface profile of the icy road and the sliding velocity during braking (= highly frequent velocity range during ABS braking). The inventor has found that reflecting such conditions in viscoelastic measurement enables accurate prediction (estimation) of ice braking performance. This finding has led to the completion of the present invention.

The present invention relates to winter tires, including a tread containing a rubber composition,
the rubber composition satisfying the following relationships (1) and (2):

$$0.65 \leq \tan\delta \text{ at } -30°C \leq 1.10 \quad (1);$$

and

$$0.14 \leq \tan\delta \text{ at } -30°C/E^* \text{ at } 0°C \leq 0.40 \quad (2),$$

wherein the tan δ at -30°C represents the tan δ at -30°C under the shear mode conditions below, and the tan δ at - 30°C and the E* at 0°C represent the tan δ at -30°C and the E* at 0°C, respectively, under the elongation mode conditions below:

[Shear mode]

Stress: 0.2 MPa,
Frequency: 10 Hz,
tan δ measurement temperature: -30°C;

[Elongation mode]

Elongation strain: 2.5%,
Frequency: 10 Hz,
tan δ measurement temperature: -30°C,
E* measurement temperature: 0°C,

wherein E* is the complex modulus in MPa, and wherein the rubber composition contains one or more types of styrene-butadiene rubber (SBR), wherein the amount of the SBR based on 100% by mass of the rubber components is 5% by mass or more and 30% by mass or less.

The rubber composition preferably contains, per 100 parts by mass of at least one rubber component therein, 60 to 80 parts by mass of at least one filler.

The rubber composition preferably contains, per 100 parts by mass of at least one rubber component therein, 50 to 70 parts by mass of at least one plasticizer.

The rubber composition preferably contains, per 100 parts by mass of at least one rubber component therein, 40 to 60 parts by mass of at least one liquid plasticizer.

The rubber composition preferably contains, per 100 parts by mass of at least one rubber component therein, 5 to 15 parts by mass of at least one resin.

The tan δ at -30°C preferably satisfies the following relationship:

$$0.78 \leq \tan\delta \text{ at } -30°C \leq 0.98.$$

The tan δ at -30°C/E* at 0°C preferably satisfies the following relationship:

$$0.22 \leq \tan\delta \text{ at } -30°C/E^* \text{ at } 0°C \leq 0.33.$$

The E* at 0°C in relationship (2) is preferably 2.7 to 4.3 MPa.

The rubber composition preferably contains, based on 100% by mass of at least one rubber component therein, 20 to 70% by mass of at least one isoprene-based rubber.

The rubber composition preferably contains, based on 100% by mass of at least one rubber component therein, 10 to 70% by mass of at least one polybutadiene rubber.

The rubber composition preferably contains, per 100 parts by mass of at least one rubber component therein, 1 to 20 parts by mass of at least one carbon black.

The rubber composition preferably contains, per 100 parts by mass of at least one rubber component therein, 30 to 100 parts by mass of at least one silica.

The rubber composition preferably contains at least one selected from the group consisting of aromatic vinyl polymers, petroleum resins, and terpene resins.

The rubber composition preferably contains at least one selected from the group consisting of oils and liquid farnesene polymers.

## ADVANTAGEOUS EFFECTS OF INVENTION

The winter tires according to the present invention include a tire component containing a rubber composition satisfying relationships (1) and (2) with respect to the tan δ at -30°C under the above shear mode conditions, and the tan δ at -30°C/E* at 0°C under the above elongation mode conditions, respectively. Thus, the present invention provides winter tires having excellent ice braking performance.

## DESCRIPTION OF EMBODIMENTS

The winter tires of the present invention include a tire component containing a rubber composition satisfying relationships (1) and (2) with respect to the tan δ at - 30°C under the above shear mode conditions, and the tan δ at -30°C/E* at 0°C under the above elongation mode conditions, respectively. Such winter tires provide excellent ice braking

performance.

The mechanism of the above-mentioned advantageous effect is not clear, but is believed to be as follows.

As described earlier, the present invention is based on revealing the frequency input from the icy road surface to the tread rubber during braking on an icy road by using the relationship between the surface profile of the icy road and the sliding velocity during braking, and reflecting such conditions in viscoelasticity measurement to derive the parameters of relationships (1) and (2). Specifically, as for relationship (1), viscoelastic measurement is performed at a temperature and a frequency predetermined based on the principle of friction while using a measurement stress based on the ground contact pressure of a tire, and the physical property parameter "tan δ at -30°C" is defined as a potential of hysteresis friction in a shear deformation mode. As for relationship (2), the physical property parameter "tan δ at -30°C/E* at 0°C" is defined as a potential of hysteresis friction in measurement at a constant strain in an elongation mode. Then, since when the potential of hysteresis friction (tan δ) is excessively high, the ice on an icy road will be melted into water which may reduce the contact area between the rubber and the road surface, it is considered that this phenomenon can be suppressed by determining the optimal ranges of the "tan δ at -30°C" and "tan δ at -30°C/E* at 0°C". Thus, it is believed that excellent ice braking performance can be provided by satisfying relationships (1) and (2).

Accordingly, the present invention solves the problem (purpose) of improving ice braking performance by formulating a winter tire including a tire component containing a rubber composition satisfying the relationship (1): 0.65 ≤ tan δ at -30°C ≤ 1.10; and the relationship (2): 0.14 ≤ tan δ at -30°C/E* at 0°C ≤ 0.40. In other words, the parameters of relationships (1) and (2) do not define the problem (purpose), and the problem herein is to improve ice braking performance. In order to provide a solution to this problem, an inventive structure satisfying these parameters has been devised.

The rubber composition (vulcanized rubber composition) of the tire component satisfies the following relationship (1) with respect to the tan δ at -30°C under the shear mode conditions below. Specifically, the tan δ (at -30°C) of the rubber composition measured at a predetermined stress of 0.2 MPa rather than at a predetermined strain satisfies the relationship (1):

$$0.65 \le \tan\delta \text{ at } -30°C \le 1.10 \quad (1),$$

[Shear mode]

Stress: 0.2 MPa,
Frequency: 10 Hz,
tan δ measurement temperature: -30°C.

The tan δ at -30°C in relationship (1) is preferably 0.70 or higher, more preferably 0.75 or higher, still more preferably 0.78 or higher, particularly preferably 0.80 or higher. The tan δ at -30°C is preferably 1.06 or lower, more preferably 1.01 or lower, still more preferably 0.98 or lower, particularly preferably 0.97 or lower. When the tan δ at -30°C is within the range indicated above, good ice braking performance tends to be obtained.

The rubber composition (vulcanized rubber composition) of the tire component satisfies the following relationship (2) with respect to the tan δ at -30°C under the elongation mode conditions below and the E* (MPa) at 0°C under the elongation mode conditions below. Specifically, the tan δ at -30°C and E* at 0°C of the rubber composition measured at a predetermined strain satisfy the relationship (2):

$$0.14 \le \tan\delta \text{ at } -30°C/E^* \text{ at } 0°C \le 0.40 \quad (2),$$

[Elongation mode]

Elongation strain: 2.5%,
Frequency: 10 Hz,
tan δ measurement temperature: -30°C,
E* measurement temperature: 0°C.

The tan δ at -30°C/E* at 0°C in relationship (2) is preferably 0.17 or higher, more preferably 0.20 or higher, still

more preferably 0.22 or higher, particularly preferably 0.23 or higher. The tan δ at -30°C/E* at 0°C is preferably 0.38 or lower, more preferably 0.35 or lower, still more preferably 0.33 or lower, particularly preferably 0.32 or lower. When the tan δ at -30°C/E* at 0°C is within the range indicated above, good ice braking performance tends to be obtained.

The tan δ at -30°C in relationship (2) is preferably 0.70 or higher, more preferably 0.75 or higher, still more preferably 0.80 or higher. The tan δ at -30°C is preferably 1.05 or lower, more preferably 1.01 or lower, still more preferably 0.97 or lower. When the tan δ at - 30°C is within the range indicated above, good ice braking performance tends to be obtained.

The E* at 0°C in relationship (2) is preferably 2.7 MPa or higher, more preferably 2.9 MPa or higher, still more preferably 3.0 MPa or higher. The E* at 0°C is preferably 4.3 MPa or lower, more preferably 4.0 MPa or lower, still more preferably 3.5 MPa or lower. When the E* at 0°C is within the range indicated above, good ice braking performance tends to be obtained.

The "tan δ at -30°C under the shear mode conditions", "tan δ at -30°C under the elongation mode conditions", and "E* at 0°C under the elongation mode conditions" can be measured by viscoelastic testing, specifically as described later in EXAMPLES.

The "tan δ at -30°C under the shear mode conditions" and "tan δ at -30°C under the elongation mode conditions" can be controlled by techniques capable of controlling tan δ at low temperature. For example, the "tan δ at -30°C under the shear mode conditions" and "tan δ at -30°C under the elongation mode conditions" tend to be increased by the following techniques: using styrene-butadiene rubber as a rubber component; increasing the amount of polybutadiene rubber; increasing the amount of filler; incorporating an appropriate amount of resin; or incorporating an appropriate amount of liquid plasticizer (e.g., oil, liquid resin); or other techniques.

The "E* at 0°C under the elongation mode conditions" can be controlled by techniques capable of controlling E* at low temperature. For example, the "E* at 0°C under the elongation mode conditions" tends to be increased by the following techniques: using styrene-butadiene rubber as a rubber component; using a rubber component having a high molecular weight; increasing the amount of filler; increasing the amount of resin; or reducing the amount of liquid plasticizer; or other techniques.

Then, such techniques may be used to control the "tan δ at -30°C under the shear mode conditions", "tan δ at - 30°C under the elongation mode conditions", and "E* at 0°C under the elongation mode conditions", thereby controlling relationships (1) and (2). Thus, a rubber composition satisfying these parameters can be prepared.

(Rubber component)

The rubber composition contains one or more types of styrene-butadiene rubber, wherein the amount of the styrene-butadiene rubber based on 100% by mass of the rubber components is 5% by mass or more and 30% by mass or less. Other rubber components which may be used in the rubber composition include diene rubbers such as isoprene-based rubbers, polybutadiene rubbers (BR), styrene-isoprene-butadiene rubbers (SIBR), ethylene-propylene-diene rubbers (EPDM), chloroprene rubbers (CR), and acrylonitrile butadiene rubbers (NBR). Butyl-based rubbers and fluororubbers may also be used. From the standpoint of ice braking performance, isoprene-based rubbers and BR are preferred among these.

The diene rubbers may be either unmodified diene rubbers or modified diene rubbers.

Any diene rubber having a functional group interactive with a filler such as silica may be used. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber that has been modified (coupled) with a polyfunctional compound having two or more epoxy groups in the molecule so that a hydroxy or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups).

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR),

and grafted natural rubbers. Examples of the modified IR include epoxidized polyisoprene rubbers, hydrogenated polyisoprene rubbers, and grafted polyisoprene rubbers. These may be used alone or in combinations of two or more.

When the rubber composition contains one or more isoprene-based rubbers, the amount of the isoprene-based rubbers based on 100% by mass of the rubber components is preferably 5% by mass or more, more preferably 20% by mass or more, still more preferably 30% by mass or more. The upper limit is preferably 80% by mass or less, more preferably 70% by mass or less, still more preferably 60% by mass or less. When the amount is within the range indicated above, good ice braking performance tends to be obtained.

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 10% by mass or higher, still more preferably 15% by mass or higher. The styrene content is preferably 45% by mass or lower, more preferably 35% by mass or lower, still more preferably 30% by mass or lower. When the styrene content is within the range indicated above, good ice braking performance tends to be obtained.

Herein, the styrene content can be measured by $^1$H-NMR analysis.

The vinyl bond content of the SBR is preferably 3% by mass or higher, more preferably 5% by mass or higher, still more preferably 7% by mass or higher. The vinyl bond content is preferably 25% by mass or lower, more preferably 15% by mass or lower, still more preferably 13% by mass or lower. When the vinyl bond content is within the range indicated above, good ice braking performance tends to be obtained.

Herein, the vinyl bond content (1,2-butadiene unit content) can be measured by infrared absorption spectrometry.

SBR products manufactured or sold by Sumitomo Chemical Co., Ltd., JSR Corporation, Asahi Kasei Corporation, Zeon Corporation, etc. may be used as the SBR.

The SBR may be either unmodified or modified SBR. Examples of the modified SBR include those into which functional groups as listed for the modified diene rubbers are introduced.

The rubber composition contains one or more types of SBR, wherein the amount of the SBR based on 100% by mass of the rubber components is 5% by mass or more, more preferably 8% by mass or more, still more preferably 10% by mass or more. The upper limit is 30% by mass or less. When the amount is within the range indicated above, good ice braking performance tends to be obtained.

Any BR may be used. Examples include high-cis BR having high cis content, syndiotactic polybutadiene crystal-containing BR, and BR synthesized using rare earth catalysts (rare earth-catalyzed BR). These may be used alone or in combinations of two or more. In particular, high-cis BR having a cis content of 90% by mass or higher is preferred in order to enhance abrasion resistance.

The BR may be either unmodified or modified BR. Examples of the modified BR include those into which functional groups as listed for the modified diene rubbers are introduced. The use of the modified BR is advantageous for ice braking performance, low heat-build up properties, and micro E* reduction.

The BR may be commercially available from Ube Industries, Ltd., JSR Corporation, Asahi Kasei Corporation, Zeon Corporation, etc.

When the rubber composition contains one or more types of BR, the amount of the BR based on 100% by mass of the rubber components is preferably 5% by mass or more, more preferably 10% by mass or more, still more preferably 20% by mass or more. The upper limit is preferably 80% by mass or less, more preferably 70% by mass or less, still more preferably 60% by mass or less. When the amount is within the range indicated above, good ice braking performance tends to be obtained.

(Filler)

From the standpoint of ice braking performance, the rubber composition preferably contains one or more fillers. Any filler may be used, including materials known in the rubber field. Examples include silica, carbon black, calcium carbonate, talc, alumina, clay, aluminum hydroxide, aluminum oxide, and mica. Carbon black or silica is preferred among these.

The amount of the fillers (total filler amount) per 100 parts by mass of the rubber components in the rubber composition is preferably 20 parts by mass or more, more preferably 40 parts by mass or more, still more preferably 50 parts by mass or more, particularly preferably 60 parts by mass or more. The upper limit is preferably 150 parts by mass or less, more preferably 120 parts by mass or less, still more preferably 100 parts by mass or less, particularly preferably 80 parts by mass or less. When the amount is within the range indicated above, good ice braking performance tends to be obtained.

Any carbon black may be used, and examples include N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be

used. These may be used alone or in combinations of two or more.

The amount of the carbon black per 100 parts by mass of the rubber components in the rubber composition is preferably 1 part by mass or more, more preferably 3 parts by mass or more, still more preferably 5 parts by mass or more. The amount is also preferably 50 parts by mass or less, more preferably 20 parts by mass or less, still more preferably 10 parts by mass or less. When the amount is within the range indicated above, good ice braking performance tends to be obtained.

The nitrogen adsorption specific surface area ($N_2SA$) of the carbon black is preferably 50 $m^2/g$ or more, more preferably 70 $m^2/g$ or more, still more preferably 90 $m^2/g$ or more. The $N_2SA$ is also preferably 200 $m^2/g$ or less, more preferably 150 $m^2/g$ or less, still more preferably 130 $m^2/g$ or less. When the $N_2SA$ is within the range indicated above, good ice braking performance tends to be obtained.

The nitrogen adsorption specific surface area of the carbon black is determined in accordance with JIS K6217-2:2001.

Examples of the silica include dry silica (anhydrous silica) and wet silica (hydrous silica). Wet silica is preferred among these because it contains a large number of silanol groups. Commercial products available from Degussa, Rhodia, Tosoh Silica Corporation, Solvay Japan, Tokuyama Corporation, etc. may be used. These may be used alone or in combinations of two or more.

The amount of the silica per 100 parts by mass of the rubber components in the rubber composition is preferably 25 parts by mass or more, more preferably 30 parts by mass or more, still more preferably 50 parts by mass or more. The upper limit of the amount is preferably 150 parts by mass or less, more preferably 100 parts by mass or less, still more preferably 80 parts by mass or less. When the amount is within the range indicated above, good ice braking performance tends to be obtained.

The nitrogen adsorption specific surface area ($N_2SA$) of the silica is preferably 50 $m^2/g$ or more, more preferably 100 $m^2/g$ or more, still more preferably 150 $m^2/g$ or more. The upper limit of the $N_2SA$ of the silica is not limited, but is preferably 350 $m^2/g$ or less, more preferably 250 $m^2/g$ or less, still more preferably 200 $m^2/g$ or less. When the $N_2SA$ is within the range indicated above, good ice braking performance tends to be obtained.

The $N_2SA$ of the silica is measured by a BET method in accordance with ASTM D3037-93.

(Silane coupling agent)

The rubber composition containing silica preferably further contains one or more silane coupling agents.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more.

The amount of the silane coupling agents per 100 parts by mass of the silica in the rubber composition is preferably 3 parts by mass or more, more preferably 6 parts by mass or more. The amount is also preferably 20 parts by mass or less, more preferably 15 parts by mass or less. When the amount is within the range indicated above, good ice braking performance tends to be obtained.

(Plasticizer)

The rubber composition may contain one or more plasticizers. Plasticizers refer to materials that may impart plasticity to rubber components. Examples include liquid plasticizers (plasticizers that are liquid at room temperature (25°C)) and resins (resins that are solid at room temperature (25°C)).

When the rubber composition contains one or more plasticizers, the amount of the plasticizers (total plasticizer amount) per 100 parts by mass of the rubber components is preferably 20 parts by mass or more, more preferably 40 parts by mass or more, still more preferably 50 parts by mass or more. The upper limit is preferably 120 parts by mass

or less, more preferably 100 parts by mass or less, still more preferably 80 parts by mass or less, particularly preferably 70 parts by mass or less. When the amount is within the range indicated above, good ice braking performance tends to be obtained.

Any liquid plasticizer (plasticizer that is liquid at room temperature (25°C)) may be used. Examples include oils, liquid resins, liquid diene polymers, and liquid farnesene polymers. These may be used alone or in combinations of two or more.

When the rubber composition contains one or more liquid plasticizers, the amount of the liquid plasticizers per 100 parts by mass of the rubber components is preferably 15 parts by mass or more, more preferably 35 parts by mass or more, still more preferably 40 parts by mass or more. The upper limit is preferably 100 parts by mass or less, more preferably 80 parts by mass or less, still more preferably 60 parts by mass or less. When the amount is within the range indicated above, good ice braking performance tends to be obtained.

Examples of the oils include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. may be used. Process oils such as paraffinic process oils, aromatic process oils, and naphthenic process oils, or plant oils are preferred among these.

When the rubber composition contains one or more oils, the amount of the oils per 100 parts by mass of the rubber components is preferably 15 parts by mass or more, more preferably 35 parts by mass or more, still more preferably 40 parts by mass or more. The upper limit is preferably 100 parts by mass or less, more preferably 80 parts by mass or less, still more preferably 60 parts by mass or less. When the amount is within the range indicated above, good ice braking performance tends to be obtained.

Examples of the liquid resins include resins which are liquid at 25°C, such as terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins.

When the rubber composition contains one or more liquid resins, the amount of the liquid resins per 100 parts by mass of the rubber components is preferably 15 parts by mass or more, more preferably 35 parts by mass or more, still more preferably 40 parts by mass or more. The upper limit is preferably 100 parts by mass or less, more preferably 80 parts by mass or less, still more preferably 60 parts by mass or less. When the amount is within the range indicated above, good ice braking performance tends to be obtained.

Examples of the liquid diene polymers include diene polymers which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. The chain end or backbone of these polymers may be modified with a polar group.

When the rubber composition contains one or more liquid diene polymers, the amount of the liquid diene polymers per 100 parts by mass of the rubber components is preferably 15 parts by mass or more, more preferably 35 parts by mass or more, still more preferably 40 parts by mass or more. The upper limit is preferably 100 parts by mass or less, more preferably 80 parts by mass or less, still more preferably 60 parts by mass or less. When the amount is within the range indicated above, good ice braking performance tends to be obtained.

Liquid farnesene polymers refer to polymers produced by polymerization of farnesene and containing a structural unit derived from farnesene. Farnesene exists in isomeric forms, including α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

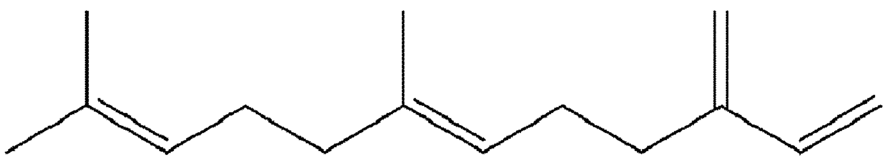

The liquid farnesene polymers may be homopolymers of farnesene (farnesene homopolymers) or copolymers of farnesene and vinyl monomers (farnesene-vinyl monomer copolymers).

Examples of the vinyl monomers include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylenes; and conjugated diene compounds such as butadiene and isoprene. These may be used alone or in combinations of two or more. Butadiene is preferred among these. In other words, preferred farnesene-vinyl monomer copolymers are copolymers of farnesene and butadiene (farnesene-butadiene copolymers).

In the farnesene-vinyl monomer copolymers, the copolymerization ratio of the farnesene to the vinyl monomer (farnesene/vinyl monomer) is preferably 40/60 to 90/10 by mass.

Liquid farnesene polymers having a weight average molecular weight (Mw) of 3,000 to 300,000 may be suitably used. The Mw of the liquid farnesene polymers is preferably 8,000 or more, more preferably 10,000 or more, but is preferably 100,000 or less, more preferably 60,000 or less, still more preferably 50,000 or less.

When the rubber composition contains one or more liquid farnesene polymers, the amount of the liquid farnesene polymers per 100 parts by mass of the rubber components is preferably 1 part by mass or more, more preferably 3 parts by mass or more, still more preferably 5 parts by mass or more. The upper limit is preferably 30 parts by mass or less, more preferably 20 parts by mass or less, still more preferably 10 parts by mass or less. When the amount is within the range indicated above, good ice braking performance tends to be obtained.

Examples of the resins (resins that are solid at room temperature (25°C)) include aromatic vinyl polymers, coumarone-indene resins, coumarone resins, indene resins, phenol resins, rosin resins, petroleum resins, terpene resins, and acrylic resins, all of which are solid at room temperature (25°C). The resins may be hydrogenated. These may be used alone or in combination of two or more. From the standpoints of ice braking performance and wet performance, petroleum resins or terpene resins are preferred among these.

The amount of the resins per 100 parts by mass of the rubber components in the rubber composition is preferably 3 parts by mass or more, more preferably 5 parts by mass or more, still more preferably 7 parts by mass or more. The upper limit is preferably 30 parts by mass or less, more preferably 20 parts by mass or less, still more preferably 15 parts by mass or less. When the amount is within the range indicated above, good ice braking performance tends to be obtained.

The softening point of the resins is preferably 80°C or higher, more preferably 90°C or higher, still more preferably 100°C or higher. The upper limit is preferably 180°C or lower, more preferably 160°C or lower, still more preferably 140°C or lower. When the softening point is within the range indicated above, good ice braking performance tends to be obtained.

Herein, the softening point of the resins is determined in accordance with JIS K 6220-1:2001 using a ring and ball softening point measuring apparatus and defined as the temperature at which the ball drops down.

Examples of the petroleum resins include C5 resins, C9 resins, C5/C9 resins, and dicyclopentadiene (DCPD) resins. DCPD resins are preferred among these.

The amount of the petroleum resins per 100 parts by mass of the rubber components in the rubber composition is preferably 1 part by mass or more, more preferably 3 parts by mass or more, still more preferably 5 parts by mass or more. The upper limit is preferably 25 parts by mass or less, more preferably 15 parts by mass or less, still more preferably 10 parts by mass or less. When the amount is within the range indicated above, good ice braking performance tends to be obtained. The amount of the DCPD resins is suitably as described above.

The terpene resins refer to polymers containing terpene as a structural unit. Examples include polyterpene resins produced by polymerization of terpene compounds, and aromatic modified terpene resins produced by polymerization of terpene compounds and aromatic compounds. Hydrogenated products of the foregoing resins may also be used.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpenes. Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, i.e. α-pinene and β-pinene, are classified into β-pinene resins mainly containing β-pinene and α-pinene resins mainly containing α-pinene, depending on the proportions of the components in the resins.

Examples of the aromatic modified terpene resins include terpene phenol resins made from the above-mentioned terpene compounds and phenolic compounds, and terpene styrene resins made from the above-mentioned terpene compounds and styrene compounds. Terpene phenol styrene resins made from the terpene compounds, phenolic compounds, and styrene compounds may also be used. Examples of the phenolic compounds include phenol, bisphenol

A, cresol, and xylenol. Examples of the styrene compounds include styrene and α-methylstyrene.

The amount of the terpene resins per 100 parts by mass of the rubber components in the rubber composition is preferably 1 part by mass or more, more preferably 3 parts by mass or more, still more preferably 5 parts by mass or more. The upper limit is preferably 30 parts by mass or less, more preferably 20 parts by mass or less, still more preferably 15 parts by mass or less. When the amount is within the range indicated above, good ice braking performance tends to be obtained.

The aromatic vinyl polymers refer to polymers containing an aromatic vinyl monomer as a structural unit. Examples include resins produced by polymerization of α-methylstyrene and/or styrene. Specific examples include styrene homopolymers (styrene resins), α-methylstyrene homopolymers (α-methylstyrene resins), copolymers of α-methylstyrene and styrene, and copolymers of styrene and other monomers. The amount of the aromatic vinyl polymers per 100 parts by mass of the rubber components in the rubber composition is preferably 1 to 30 parts by mass.

The coumarone-indene resins refer to resins containing coumarone and indene as main monomer components forming the skeleton (backbone) of the resins. Examples of monomer components which may be contained in the skeleton in addition to coumarone and indene include styrene, α-methylstyrene, methylindene, and vinyltoluene. The amount of the coumarone-indene resins per 100 parts by mass of the rubber components in the rubber composition is preferably 1 to 30 parts by mass.

The coumarone resins refer to resins containing coumarone as a main monomer component forming the skeleton (backbone) of the resins. The amount of the coumarone resins per 100 parts by mass of the rubber components in the rubber composition is preferably 1 to 30 parts by mass.

The indene resins refer to resins containing indene as a main monomer component forming the skeleton (backbone) of the resins. The amount of the indene resins per 100 parts by mass of the rubber components in the rubber composition is preferably 1 to 30 parts by mass.

Examples of the phenol resins include those known, such as polymers produced by reaction of phenol with aldehydes such as formaldehyde, acetaldehyde, or furfural using acid or alkali catalysts. Preferred among these are those produced by reaction using acid catalysts (e.g., novolac-type phenol resins). The amount of the phenol resins per 100 parts by mass of the rubber components in the rubber composition is preferably 1 to 30 parts by mass.

Examples of the rosin resins include rosin-based resins, such as typically natural rosins, polymerized rosins, modified rosins, and esterified compounds thereof, and hydrogenated products thereof. The amount of the rosin resins per 100 parts by mass of the rubber components in the rubber composition is preferably 1 to 30 parts by mass.

The acrylic resins refer to polymers containing an acrylic monomer as a structural unit. Examples include styrene acrylic resins such as styrene acrylic resins containing carboxyl groups which are produced by copolymerization of aromatic vinyl monomer components and acrylic monomer components. Solvent-free, carboxyl group-containing styrene acrylic resins are suitable among these.

The solvent-free, carboxyl group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are incorporated herein by reference) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters such as 2-ethylhexyl acrylate), (meth)acrylamide, and (meth)acrylamide derivatives. The term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives, and aromatic vinyls, other monomer components may also be used as monomer components of the acrylic resins. The amount of the acrylic resins per 100 parts by mass of the rubber components in the rubber composition is preferably 1 to 30 parts by mass.

The plasticizers may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

(Other materials)

From the standpoints of properties such as crack resistance and ozone resistance, the rubber composition preferably contains one or more antioxidants.

Any antioxidant may be used, and examples include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Preferred among these are p-phenylenediamine antioxidants or quinoline antioxidants, with N-(1,3-dimethylbutyl)-N'-phenyl-p-phenylenediamine or 2,2,4-trimethyl-1,2-dihydroquinoline polymer being more preferred. Commercial products available from Seiko Chemical Co., Ltd., Sumitomo Chemical Co., Ltd., Ouchi Shinko Chemical Industrial Co., Ltd., Flexsys, etc. may be used.

The amount of the antioxidants per 100 parts by mass of the rubber components in the rubber composition is preferably 0.2 parts by mass or more, more preferably 0.5 parts by mass or more. The amount is preferably 7.0 parts by mass or less, more preferably 4.0 parts by mass or less.

The rubber composition preferably contains one or more types of stearic acid. The amount of the stearic acid per 100 parts by mass of the rubber components in the rubber composition is preferably 0.5 to 10 parts by mass, more preferably 0.5 to 5 parts by mass.

The stearic acid may be a conventional one, e.g., available from NOF Corporation, Kao Corporation, FUJIFILM Wako Pure Chemical Corporation, or Chiba Fatty Acid Co., Ltd.

The rubber composition preferably contains one or more types of zinc oxide. The amount of the zinc oxide per 100 parts by mass of the rubber components in the rubber composition is preferably 0.5 to 10 parts by mass, more preferably 1 to 5 parts by mass.

The zinc oxide may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The rubber composition may contain one or more waxes. The amount of the waxes per 100 parts by mass of the rubber components in the rubber composition is preferably 0.5 to 10 parts by mass, more preferably 1 to 5 parts by mass.

Any wax may be used, and examples include petroleum waxes, natural waxes, and synthetic waxes obtained by purifying or chemically treating a plurality of waxes. These waxes may be used alone or in combinations of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Commercial products available from Ouchi Shinko Chemical Industrial Co., Ltd., Nippon Seiro Co., Ltd., Seiko Chemical Co., Ltd., etc. may be used.

The rubber composition may contain one or more processing aids. The amount of the processing aids per 100 parts by mass of the rubber components in the rubber composition is preferably 0.5 parts by mass or more, more preferably 1.0 part by mass or more, but is preferably 5.0 parts by mass or less, more preferably 3.0 parts by mass or less.

Examples of the processing aids include fatty acid metal salts, fatty acid amides, amide esters, silica surface activators, fatty acid esters, mixtures of fatty acid metal salts with amide esters, and mixtures of fatty acid metal salts with fatty acid amides. These may be used alone or in combinations of two or more. In particular, preferred is at least one selected from the group consisting of fatty acid metal salts, amide esters, and mixtures of fatty acid metal salts with amide esters or fatty acid amides, more preferably from fatty acid metal salts and mixtures of fatty acid metal salts with fatty acid amides.

The fatty acids of the fatty acid metal salts are not limited, and examples include saturated or unsaturated fatty acids, preferably C6-C28, more preferably C10-C25, still more preferably C14-C20 saturated or unsaturated fatty acids, such as lauric acid, myristic acid, palmitic acid, stearic acid, oleic acid, linoleic acid, linolenic acid, arachidic acid, behenic acid, and nervonic acid. These may be used alone, or two or more of these may be used in admixture. Saturated fatty acids are preferred among these, with C14-C20 saturated fatty acids being more preferred.

Examples of the metals of the fatty acid metal salts include alkali metals such as potassium and sodium, alkaline earth metals such as magnesium, calcium, and barium, zinc, nickel, and molybdenum. These may be used alone or in combinations of two or more. Zinc or calcium is preferred among these, with zinc being more preferred.

Examples of the amide esters include fatty acid amide esters containing the above-mentioned saturated or unsaturated fatty acids as constituent components. These may be used alone or in combinations of two or more.

The fatty acid amides may be either saturated or unsaturated fatty acid amides. These may be used alone or in combinations of two or more. Examples of the saturated fatty acid amides include N-(1-oxooctadecyl)sarcosinamide, stearamide, and behenamide. Examples of the unsaturated fatty acid amides include oleamide and erucamide.

Specific examples of the mixtures of fatty acid metal salts with amide esters include Aflux 16 available from Rhein Chemie, which is a mixture of a fatty acid calcium salt with an amide ester.

Specific examples of the mixtures of fatty acid metal salts with fatty acid amides include WB16 available from Struktol, which is a mixture of a fatty acid calcium salt with a fatty acid amide.

The processing aids may be commercially available from Rhein Chemie, Struktol, etc.

The rubber composition preferably contains one or more types of sulfur to moderately crosslink the polymer chains, thereby imparting good properties.

The amount of the sulfur per 100 parts by mass of the rubber components in the rubber composition is preferably 0.1 parts by mass or more, more preferably 0.3 parts by mass or more, still more preferably 0.5 parts by mass or more. The amount is preferably 4.0 parts by mass or less, more preferably 3.0 parts by mass or less, still more preferably 2.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. These may be used alone or in combinations of two or more.

The rubber composition preferably contains one or more vulcanization accelerators.

The amount of the vulcanization accelerators in the rubber composition is not limited and may be arbitrarily set depending on the desired cure rate or crosslink density. The amount of the vulcanization accelerators per 100 parts by mass of the rubber components is preferably 2.0 parts by mass or more, more preferably 3.0 parts by mass or more, still more preferably 3.5 parts by mass or more. The upper limit is preferably 8.0 parts by mass or less, more preferably 6.0 parts by mass or less, still more preferably 5.0 parts by mass or less.

Any type of vulcanization accelerator may be used, including usually used ones. Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide, guanidine, and benzothiazole vulcanization accelerators are preferred among these.

In addition to the above-mentioned components, the rubber composition may appropriately contain other compounding agents or materials commonly used in the tire industry such as release agents.

The rubber composition may be prepared by known methods. For example, it may be prepared by kneading the components using a rubber kneading machine such as an open roll mill or Banbury mixer, and vulcanizing the kneaded mixture.

The kneading conditions are as follows. In a base kneading step involving kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step involving kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120 to 200°C, preferably 140 to 180°C.

The rubber composition may be used in various tire components, including treads (cap treads), sidewalls, base treads, undertreads, clinches, bead apexes, breaker cushion rubbers, rubbers for carcass cord topping, insulations, chafers, and innerliners. It is especially suitable for use in treads (monolayer treads, or cap treads of multilayer treads).

The present winter tires may be produced from the above-described rubber composition by usual methods. Specifically, an unvulcanized rubber composition containing the above-mentioned components may be extruded into the shape of a tread (e.g., a cap tread) or other tire components, and assembled with other tire components in a tire building machine in a usual manner to build an unvulcanized tire, which may then be heated and pressurized in a vulcanizer to produce a winter tire.

Examples of the winter tires include pneumatic tires and airless tires. Pneumatic tires are preferred among these. The winter tires are suitable for use as studless winter tires, cold weather tires, snow tires, studded tires, or other similar tires. The tires can be used as tires for passenger vehicles, large passenger vehicles, large SUVs, heavy duty vehicles such as trucks and buses, light trucks, or motorcycles, racing tires (high performance tires), or other tires. They are especially suitable for use as tires for passenger vehicles.

EXAMPLES

The present invention will be specifically described with reference to, but not limited to, examples.

<Synthesis Example: Synthesis of polybutadiene>

A catalyst composition (molar ratio of iodine atom/lanthanoid-containing compound: 2.0) was previously prepared by reacting and aging 0.90 mmol of 1,3-butadiene with a cyclohexane solution containing 0.18 mmol of neodymium versatate, a toluene solution containing 3.6 mmol of methylalumoxane, a toluene solution containing 6.7 mmol of diisobutylaluminum hydride, and a toluene solution containing 0.36 mmol of trimethylsilyl iodide for 60 minutes at 30°C. Next, 2.4 kg of cyclohexane and 300 g of 1,3-butadiene were introduced into a 5 L autoclave purged with nitrogen. Then, the catalyst composition was introduced into the autoclave, and a polymerization reaction was performed for two hours at 30°C to give a polymer solution of polybutadiene. The reaction conversion rate of the introduced 1,3-butadiene was almost 100%.

<Production Example: Synthesis of modified BR)

A modified BR was prepared by treating the polymer solution of polybutadiene prepared in the synthesis example as follows. To the polymer solution maintained at 30°C was added a toluene solution containing 1.71 mmol of 3-glycidoxypropyltrimethoxysilane, and they were reacted for 30 minutes to give a reaction solution. To the reaction solution was added a toluene solution containing 1.71 mmol of 3-aminopropyltriethoxysilane, and they were stirred for 30 minutes. Subsequently, to the resulting reaction solution was added a toluene solution containing 1.28 mmol of tetraisopropyl titanate, followed by stirring for 30 minutes. Then, the polymerization reaction was stopped by adding a methanol solution containing 1.5 g of 2,4-di-tert-butyl-p-cresol. The resulting solution was used as a modified polymer solution. The yield was 2.5 kg. To the modified polymer solution was then added 20 L of an aqueous solution with a pH of 10 adjusted with sodium hydroxide, followed by performing a condensation reaction at 110°C for two hours while removing the solvent. Thereafter, the product was dried using a roll at 110°C to obtain a dry product which was used as a modified polymer (modified BR).

The chemicals used in examples and comparative examples are listed below.

NR: TSR 20
BR 1: BR730 (high-cis BR, Nd-catalyzed BR) available from JSR Corporation
BR 2: Modified BR (modified Nd-catalyzed BR) synthesized in the production example
SBR 1: Tufdene 1000 (unmodified S-SBR, styrene content 18% by mass, vinyl bond content 10% by mass) available from Asahi Kasei Corporation
SBR 2: Tufdene 2000R (unmodified S-SBR, styrene content 25% by mass, vinyl bond content 10% by mass) available from Asahi Kasei Corporation
Carbon black: Seast N220 ($N_2SA$: 111 $m^2/g$) available from Mitsubishi Chemical Corporation
Silica 1: ULTRASIL VN3 ($N_2SA$: 172 $m^2/g$) available from Evonik Degussa
Silica 2: 115GR ($N_2SA$: 115 $m^2/g$) available from Solvay Japan
Resin 1: YS resin PX1150N (β-pinene resin, softening point 115°C) available from Yasuhara Chemical Co., Ltd.
Resin 2: Oppera PR-120 (hydrogenated dicyclopentadiene resin, softening point 120°C) available from ExxonMobil
Resin 3: SYLVARES SA85 (copolymer of α-methylstyrene and styrene, softening point 85°C) available from Kraton Corporation
Wax: Ozoace 0355 available from Nippon Seiro Co., Ltd.
Processing aid: WB16 (mixture of fatty acid metal salt (fatty acid calcium salt, constituent fatty acid: C14-C20 saturated fatty acids) and fatty acid amide) available from Struktol
Stearic acid: stearic acid beads "TSUBAKI" available from NOF Corporation
Zinc oxide: Zinc oxide #2 available from Mitsui Mining & Smelting Co., Ltd.
Antioxidant 6C: NOCRAC 6C (N-phenyl-N'-(1,3-dimethylbutyl)-p-phenylenediamine) available from Ouchi Shinko Chemical Industrial Co., Ltd.
Antioxidant RD: NOCRAC 224 (poly(2,2,4-trimethyl-1,2-dihydroquinoline)) available from Ouchi Shinko Chemical Industrial Co., Ltd.
Silane coupling agent: Si266 (bis(3-triethoxysilylpropyl)disulfide) available from Evonik Degussa
Oil 1: DIANA PROCESS NH-70S (aromatic process oil) available from Idemitsu Kosan Co., Ltd.
Oil 2: PS-32 (mineral oil) available from Idemitsu Kosan Co., Ltd.
Clay: Crown clay (hard clay, average particle size 0.6 μm) available from Southeastern Clay Company
Liquid farnesene polymer: L-FBR-742 (liquid farnesene-butadiene copolymer, SP value: 8.1) available from Kuraray Co., Ltd.
Sulfur: HK200-5 (5 mass% oil-containing powdered sulfur) available from Hosoi Chemical Industry Co., Ltd.
Vulcanization accelerator CZ: NOCCELER CZ (N-cyclohexyl-2-benzothiazolylsulfenamide) available from Ouchi Shinko Chemical Industrial Co., Ltd.

Vulcanization accelerator M: NOCCELER M (2-mercaptobenzothiazole) available from Ouchi Shinko Chemical Industrial Co., Ltd.
Vulcanization accelerator DPG: NOCCELER D (N,N'-diphenylguanidine) available from Ouchi Shinko Chemical Industrial Co., Ltd.

[Examples and Comparative Examples]

According to the formulation shown in Table 1, the chemicals other than the sulfur and vulcanization accelerators were kneaded in a 1.7 L Banbury mixer (Kobe Steel, Ltd.) at 150°C for five minutes to give a kneaded mixture. Then, the sulfur and the vulcanization accelerators were added to the kneaded mixture, and they were kneaded in an open roll mill at 80°C for five minutes to give an unvulcanized rubber composition.
The unvulcanized rubber composition was formed into the shape of a cap tread and assembled with other tire components to build an unvulcanized tire. The unvulcanized tire was press-vulcanized at 170°C for 10 minutes to prepare a test winter tire (studless winter tire for passenger vehicles, tire size: 205/70R15).
The rubber physical properties and tire performance of the test winter tires prepared as above were evaluated as described below. Table 1 shows the results. It should be noted that Comparative Example 1 is used as a standard of comparison in Table 1.

<Viscoelastic testing>

The loss tangent (tan δ at -30°C) of samples (vulcanized rubber compositions) taken from the cap tread of each test winter tire was measured with a viscoelastic testing machine (DMA+450, Metravib) under the following shear deformation mode conditions.

[Shear mode]

Stress: 0.2 MPa
Frequency: 10 Hz
tan δ measurement temperature: -30°C
Sample size: diameter 10 mm, thickness 2 mm

<Viscoelastic testing>

The tan δ (loss tangent) at -30°C and E* (complex modulus (MPa)) at 0°C of samples (vulcanized rubber compositions) taken from the cap tread of each test winter tire were measured with a viscoelastic spectrometer VES (Iwamoto Seisakusho Co., Ltd.) under the following elongation mode conditions.

[Elongation mode]

Elongation strain: 2.5%
Frequency: 10 Hz
tan δ measurement temperature: -30°C
E* measurement temperature: 0°C
Sample size: length 10 mm, width 1.7 to 2.0 mm, thickness 1.4 to 1.5 mm

(Ice braking performance)

A set of the test winter tires were mounted on a front-engine, rear-wheel-drive car of 2000 cc displacement made in Japan. The car was driven on ice and snow at an air temperature of -6°C to -1°C to evaluate ice braking performance. Specifically, in the evaluation of ice braking performance, the distance (ice brake stopping distance) required for the car traveling on ice to stop after the brakes that lock up were applied at 30 km/h was measured and expressed as an index using the equation below. A higher index indicates better grip performance on ice (ice braking performance).

(Ice braking performance index) = (Brake stopping distance of standard comparative example)/(Brake stopping distance of each formulation example) × 100

wherein the examples 1, 2, 6 and 8 are reference examples and examples 3 to 5, 7 and 9 to 15 are inventive examples.

[Table 1]

| | | Comparative Example | | | | | | Example | | | | | | | | | | | | | | |
|---|---|---|---|---|---|---|---|---|---|---|---|---|---|---|---|---|---|---|---|---|---|---|
| | | 1 | 2 | 3 | 4 | 5 | 6 | 1 | 2 | 3 | 4 | 5 | 6 | 7 | 8 | 9 | 10 | 11 | 12 | 13 | 14 | 15 |
| Formulation (parts by mass) | NR | 40 | 35 | 35 | 30 | 35 | 50 | 40 | 50 | 50 | 50 | 50 | 50 | 50 | 40 | 50 | 50 | 50 | 40 | 50 | 50 | 50 |
| | BR 1 | 25 | | | | | | 25 | 10 | | | | 10 | | 25 | | | | | | | |
| | BR 2 | 35 | 65 | 65 | 70 | 65 | 25 | 35 | 40 | 40 | 40 | 33 | 40 | 30 | 35 | 35 | 35 | 30 | 30 | 35 | 35 | 30 |
| | SBR 1 | | | | | | | | | | | | | | | 15 | 15 | 20 | 30 | 15 | 15 | 20 |
| | SBR 2 | | | | | | 25 | | | 10 | 10 | 17 | | 20 | | | | | | | | |
| | Carbon black | 6 | 6 | 6 | 6 | 6 | | 6 | 6 | 6 | 6 | 6 | 6 | 6 | 6 | 6 | 6 | 6 | 6 | 6 | 6 | 6 |
| | Silica 1 | 64 | 58 | 63 | 20 | 40 | | 64 | 63 | 58 | 58 | 54 | 63 | 53 | 64 | 62 | 62 | 57 | 64 | 62 | 62 | 57 |
| | Silica 2 | | | | 76 | 30 | | | | | | | | | | | | | | | | |
| | Resin 1 | 4 | 15 | | 22 | 5 | 5 | 4 | 10 | 10 | 5 | | 25 | 5 | 4 | 10 | 5 | | | | | |
| | Resin 2 | 8 | | | | | | 8 | | | 5 | 8 | 5 | 8 | 8 | | 5 | 8 | 8 | | | |
| | Resin 3 | | | | | | 10 | | | | | | | | | | | | | 5 | 5 | 8 |
| | Wax | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Processing aid | 2.0 | 1.2 | 1.2 | 1.2 | 1.2 | 1.2 | 2.0 | 1.2 | 1.2 | 1.2 | 1.2 | 1.2 | 1.2 | 2.0 | 1.2 | 1.2 | 1.2 | 1.2 | 1.2 | 1.2 | 1.2 |
| | Stearic acid | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Zinc oxide | 2.0 | 1.5 | 1.5 | 1.5 | 1.5 | 1.5 | 2.0 | 1.5 | 1.5 | 1.5 | 1.5 | 1.5 | 1.5 | 2.0 | 1.5 | 1.5 | 1.5 | 1.5 | 1.5 | 1.5 | 1.5 |
| | Antioxidant 6C | 2 | 2 | 2 | 2 | 2 | 2 | 2 | 2 | 2 | 2 | 2 | 2 | 2 | 2 | 2 | 2 | 2 | 2 | 2 | 2 | 2 |
| | Antioxidant RD | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Silane coupling agent | 5.1 | 4.6 | 5.0 | 6.2 | 5.0 | 0.0 | 5.1 | 5.0 | 4.6 | 4.6 | 4.3 | 5.0 | 4.2 | 5.1 | 5.0 | 5.0 | 4.6 | 5.1 | 5.0 | 5.0 | 4.6 |
| | Oil 1 | 15 | 25 | 60 | 12 | 26 | 49 | 35 | 50 | 45 | 48 | 48 | 35 | 49 | 35 | 45 | 48 | 48 | 48 | 45 | 48 | 48 |
| | Oil 2 | 6 | 3 | | 40 | | | 6 | | | | | | | 4 | | | | | | | |
| | Clay | 10 | | | | | | 10 | | | | | | | | | | | | | | |
| | Liquid farnesene polymer | 6 | | | | | | 6 | | | | | | | 6 | | | | | | | |
| | Sulfur | 0.9 | 0.4 | 0.8 | 2.7 | 1.5 | 0.8 | 0.9 | 0.8 | 0.8 | 0.8 | 0.8 | 0.8 | 0.8 | 0.9 | 0.8 | 0.8 | 0.8 | 0.8 | 0.8 | 0.8 | 0.8 |
| | Vulcanization accelerator CZ | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator M | 0.2 | 2.0 | 2.2 | 2.4 | 2.3 | 2.2 | 0.2 | 2.2 | 2.2 | 2.2 | 2.2 | 2.2 | 2.2 | 0.2 | 2.2 | 2.2 | 2.2 | 2.2 | 2.2 | 2.2 | 2.2 |
| | Vulcanization accelerator DPG | 1.6 | 0.2 | 0.2 | 0.2 | 0.2 | 0.2 | 1.6 | 0.2 | 0.2 | 0.2 | 0.2 | 0.2 | 0.2 | 1.6 | 0.2 | 0.2 | 0.2 | 0.2 | 0.2 | 0.2 | 0.2 |
| Rubber physical properties | tan δ at -30°C (Stress 0.2 Mpa) | 0.61 | 0.63 | 0.56 | 0.63 | 0.55 | 1.12 | 0.71 | 0.82 | 0.89 | 0.96 | 1.01 | 1.02 | 1.04 | 0.71 | 0.90 | 0.95 | 1.00 | 1.06 | 0.84 | 0.90 | 0.94 |
| | tan δ at -30°C/E* at 0°C (Elongation strain 2.5%) | 0.11 | 0.13 | 0.10 | 0.12 | 0.08 | 0.42 | 0.17 | 0.23 | 0.27 | 0.31 | 0.34 | 0.36 | 0.36 | 0.17 | 0.27 | 0.31 | 0.34 | 0.38 | 0.25 | 0.29 | 0.30 |
| Evaluation | Ice braking performance (index) | 100 | 98 | 83 | 96 | 81 | 95 | 111 | 118 | 120 | 121 | 116 | 109 | 108 | 110 | 119 | 120 | 115 | 108 | 117 | 118 | 114 |

Table 1 shows that excellent ice braking performance was exhibited in the winter tires of the examples using a rubber composition satisfying relationships (1) and (2) with respect to the tan δ at -30°C under the above shear mode conditions, and the tan δ at -30°C/E* at 0°C under the above elongation mode conditions, respectively.

## Claims

1. A winter tire, comprising a tread comprising a rubber composition, **characterised by** the rubber composition satisfying the following relationships (1) and (2):

$$0.65 \leq \tan\delta \text{ at } -30°C \leq 1.10 \quad (1);$$

and

$$0.14 \leq \tan\delta \text{ at } -30°C/E^* \text{ at } 0°C \leq 0.40 \quad (2),$$

wherein the tan δ at -30°C represents the tan δ at -30°C under the shear mode conditions below, and the tan δ at -30°C and the E* at 0°C represent the tan δ at -30°C and the E* at 0°C, respectively, under the elongation mode conditions below:

[Shear mode]

Stress: 0.2 MPa,
Frequency: 10 Hz,
tan δ measurement temperature: -30°C;

[Elongation mode]

Elongation strain: 2.5%,
Frequency: 10 Hz,
tan δ measurement temperature: -30°C,
E* measurement temperature: 0°C,

wherein E* is the complex modulus in MPa,
wherein the rubber composition contains one or more types of styrene-butadiene rubber, wherein the amount of the styrene-butadiene rubber based on 100% by mass of the rubber components is 5% by mass or more and 30% by mass or less.

2. The winter tire according to claim 1,
wherein the rubber composition contains, per 100 parts by mass of at least one rubber component therein, 60 to 80 parts by mass of at least one filler.

3. The winter tire according to claim 1 or 2,
wherein the rubber composition contains, per 100 parts by mass of at least one rubber component therein, 50 to 70 parts by mass of at least one plasticizer.

4. The winter tire according to any one of claims 1 to 3,
wherein the rubber composition contains, per 100 parts by mass of at least one rubber component therein, 40 to 60 parts by mass of at least one liquid plasticizer.

5. The winter tire according to any one of claims 1 to 4,
wherein the rubber composition contains, per 100 parts by mass of at least one rubber component therein, 5 to 15 parts by mass of at least one resin.

6. The winter tire according to any one of claims 1 to 5,
wherein the tan δ at -30°C satisfies the following relationship:

$$0.78 \leq \tan \delta \text{ at } -30°C \leq 0.98.$$

**7.** The winter tire according to any one of claims 1 to 6, wherein the tan δ at -30°C/E* at 0°C satisfies the following relationship:

$$0.22 \leq \tan \delta \text{ at } -30°C/E^* \text{ at } 0°C \leq 0.33.$$

**8.** The winter tire according to any one of claims 1 to 7, wherein the E* at 0°C in relationship (2) is 2.7 to 4.3 MPa.

**9.** The winter tire according to any one of claims 1 to 8, wherein the rubber composition contains, based on 100% by mass of at least one rubber component therein, 20 to 70% by mass of at least one isoprene-based rubber.

**10.** The winter tire according to any one of claims 1 to 9, wherein the rubber composition contains, based on 100% by mass of at least one rubber component therein, 10 to 70% by mass of at least one polybutadiene rubber.

**11.** The winter tire according to any one of claims 1 to 10, wherein the rubber composition contains, per 100 parts by mass of at least one rubber component therein, 1 to 20 parts by mass of at least one carbon black.

**12.** The winter tire according to any one of claims 1 to 11, wherein the rubber composition contains, per 100 parts by mass of at least one rubber component therein, 30 to 100 parts by mass of at least one silica.

**13.** The winter tire according to any one of claims 1 to 12, wherein the rubber composition contains at least one selected from the group consisting of aromatic vinyl polymers, petroleum resins, and terpene resins.

**14.** The winter tire according to any one of claims 1 to 13, wherein the rubber composition contains at least one selected from the group consisting of oils and liquid farnesene polymers.

**Patentansprüche**

**1.** Winterreifen, der einen Laufstreifen umfasst, welcher eine Kautschukzusammensetzung umfasst,

**dadurch gekennzeichnet, dass** die Kautschukzusammensetzung den folgenden Beziehungen (1) und (2) genügt:

$$0{,}65 \leq \tan \delta \text{ bei } -30°C \leq 1{,}10 \qquad (1);$$

und

$$0{,}14 \leq \tan \delta \text{ bei } -30°C/E^* \text{ bei } 0°C \leq 0{,}40 \qquad (2),$$

wobei der tan δ bei -30°C den tan δ bei -30°C unter den nachstehenden Schermodus-Bedingungen darstellt, und der tan δ bei -30°C und der E* bei 0°C jeweils den tan δ bei -30°C und den E* bei 0°C unter den nachstehenden Dehnungsmodus-Bedingungen darstellen:

[Schermodus]

Spannung: 0,2 MPa,
Frequenz: 10 Hz,
tan $\delta$-Messtemperatur: -30°C;

[Dehnungsmodus]

Dehnungsspannung: 2,5%,
Frequenz: 10 Hz,
tan $\delta$-Messtemperatur: -30°C,
E*-Messtemperatur: 0°C,

wobei E* der komplexe Modul in MPa ist,
wobei die Kautschukzusammensetzung einen oder mehrere Typen von Styrol-Butadien-Kautschuk enthält,
wobei die Menge des Styrol-Butadien-Kautschuks, bezogen auf 100 Massenprozent der Kautschukkomponenten, 5 Massenprozent oder mehr und 30 Massenprozent oder weniger beträgt.

**2.** Winterreifen nach Anspruch 1,
wobei die Kautschukzusammensetzung, pro 100 Massenteile mindestens einer Kautschukkomponente darin, 60 bis 80 Massenteile mindestens eines Füllstoffes enthält.

**3.** Winterreifen nach Anspruch 1 oder 2,
wobei die Kautschukzusammensetzung, pro 100 Massenteile mindestens einer Kautschukkomponente darin, 50 bis 70 Massenteile mindestens eines Weichmachers enthält.

**4.** Winterreifen nach einem der Ansprüche 1 bis 3,
wobei die Kautschukzusammensetzung, pro 100 Massenteile mindestens einer Kautschukkomponente darin, 40 bis 60 Massenteile mindestens eines flüssigen Weichmachers enthält.

**5.** Winterreifen nach einem der Ansprüche 1 bis 4,
wobei die Kautschukzusammensetzung, pro 100 Massenteile mindestens einer Kautschukkomponente darin, 5 bis 15 Massenteile mindestens eines Harzes enthält.

**6.** Winterreifen nach einem der Ansprüche 1 bis 5,
wobei der tan $\delta$ bei -30°C der folgenden Beziehung genügt:

$$0{,}78 \leq \tan\delta \text{ bei } -30°C \leq 0{,}98.$$

**7.** Winterreifen nach einem der Ansprüche 1 bis 6,
wobei das tan $\delta$ bei -30°C/E* bei 0°C der folgenden Beziehung genügt:

$$0{,}22 \leq \tan\delta \text{ bei } -30°C/E^* \text{ bei } 0°C \leq 0{,}33.$$

**8.** Winterreifen nach einem der Ansprüche 1 bis 7,
wobei das E* bei 0°C in Beziehung (2) 2,7 bis 4,3 MPa beträgt.

**9.** Winterreifen nach einem der Ansprüche 1 bis 8,
wobei die Kautschukzusammensetzung, bezogen auf 100 Massenprozent mindestens einer Kautschukkomponente darin, 20 bis 70 Massenprozent mindestens eines Isopren-basierten Kautschuks enthält.

**10.** Winterreifen nach einem der Ansprüche 1 bis 9,
wobei die Kautschukzusammensetzung, bezogen auf 100 Massenprozent mindestens einer Kautschukkomponente darin, 10 bis 70 Massenprozent mindestens eines Polybutadienkautschuks enthält.

**11.** Winterreifen nach einem der Ansprüche 1 bis 10,
wobei die Kautschukzusammensetzung, pro 100 Massenteile mindestens einer Kautschukkomponente darin, 1 bis 20 Massenteile mindestens eines Rußes enthält.

**12.** Winterreifen nach einem der Ansprüche 1 bis 11,
wobei die Kautschukzusammensetzung, pro 100 Massenteile mindestens einer Kautschukkomponente darin, 30 bis 100 Massenteile mindestens eines Siliciumdioxids enthält.

**13.** Winterreifen nach einem der Ansprüche 1 bis 12,
wobei die Kautschukzusammensetzung mindestens eines enthält, welches ausgewählt ist aus der Gruppe bestehend aus aromatischen Vinylpolymeren, Petrolharzen und Terpenharzen.

**14.** Winterreifen nach einem der Ansprüche 1 bis 13,
wobei die Kautschukzusammensetzung mindestens eines enthält, welches ausgewählt ist aus der Gruppe bestehend aus Ölen und flüssigen Farnesen-Polymeren.

## Revendications

**1.** Pneu d'hiver, comprenant une bande de roulement comprenant une composition de caoutchouc,

**caractérisé par le fait que** la composition de caoutchouc remplit les relations suivantes (1) et (2) :

$$0{,}65 \leq \tan\delta \text{ à } -30\ °C \leq 1{,}10 \qquad (1)\ ;$$

et

$$0{,}14 \leq \tan\delta \text{ à } -30\ °C/E^* \text{ à } 0\ °C \leq 0{,}40 \qquad (2),$$

dans lequel la tan δ à -30 °C représente la tan δ à -30 °C dans les conditions en mode cisaillement ci-dessous, et la tan à -30 °C et E* à 0 °C représentent la tan δ à -30 °C et E* à 0 °C, respectivement, dans les conditions en mode allongement ci-dessous :

[Mode cisaillement]

Contrainte : 0,2 MPa,
Fréquence : 10 Hz,
Température de mesure de tan δ : -30 °C ;

[Mode allongement]

Allongement : 2,5 %,
Fréquence : 10 Hz,
Température de mesure de tan δ : -30 °C,
Température de mesure de E* : 0 °C,

dans lequel E* est le module complexe en MPa,
dans lequel la composition de caoutchouc contient un ou plusieurs types de caoutchouc styrène-butadiène, dans lequel la quantité de caoutchouc styrène-butadiène, sur la base de 100 % en masse des composants de caoutchouc, est de 5 % en masse ou plus et de 30 % en masse ou moins.

**2.** Pneu d'hiver selon la revendication 1,
dans lequel la composition de caoutchouc contient, par 100 parties en masse d'au moins un composant de caoutchouc à l'intérieur, de 60 à 80 parties en masse d'au moins une charge.

**3.** Pneu d'hiver selon la revendication 1 ou la revendication 2,
dans lequel la composition de caoutchouc contient, par 100 parties en masse d'au moins un composant de caoutchouc à l'intérieur, de 50 à 70 parties en masse d'au moins un plastifiant.

**4.** Pneu d'hiver selon l'une quelconque des revendications 1 à 3,

dans lequel la composition de caoutchouc contient, par 100 parties en masse d'au moins un composant de caoutchouc à l'intérieur, de 40 à 60 parties en masse d'au moins un plastifiant liquide.

5. Pneu d'hiver selon l'une quelconque des revendications 1 à 4, dans lequel la composition de caoutchouc contient, par 100 parties en masse d'au moins un composant de caoutchouc à l'intérieur, de 5 à 15 parties en masse d'au moins une résine.

6. Pneu d'hiver selon l'une quelconque des revendications 1 à 5, dans lequel la tan δ à -30 °C satisfait à la relation suivante :

$$0{,}78 \leq \tan\delta \text{ à } -30\ °C \leq 0{,}98.$$

7. Pneu d'hiver selon l'une quelconque des revendications 1 à 6, dans lequel la tan δ à -30 °C/E* à 0 °C satisfait à la relation suivante :

$$0{,}22 \leq \tan\delta \text{ à } -30\ °C/E^* \text{ à } 0\ °C \leq 0.33.$$

8. Pneu d'hiver selon l'une quelconque des revendications 1 à 7, dans lequel le module E* à 0 °C dans la relation (2) est de 2,7 à 4,3 MPa.

9. Pneu d'hiver selon l'une quelconque des revendications 1 à 8, dans lequel la composition de caoutchouc contient, sur la base de 100 % en masse d'au moins un composant de caoutchouc à l'intérieur, de 20 à 70 % en masse d'au moins un caoutchouc à base d'isoprène.

10. Pneu d'hiver selon l'une quelconque des revendications 1 à 9, dans lequel la composition de caoutchouc contient, sur la base de 100 % en masse d'au moins un composant de caoutchouc à l'intérieur, de10 à 70 % en masse d'au moins un caoutchouc polybutadiène.

11. Pneu d'hiver selon l'une quelconque des revendications 1 à 10, dans lequel la composition de caoutchouc contient, par 100 parties en masse d'au moins un composant de caoutchouc à l'intérieur, de1 à 20 parties en masse d'au moins un noir de carbone.

12. Pneu d'hiver selon l'une quelconque des revendications 1 à 11, dans lequel la composition de caoutchouc contient, par 100 parties en masse d'au moins un composant de caoutchouc à l'intérieur, de 30 à 100 parties en masse d'au moins une silice.

13. Pneu d'hiver selon l'une quelconque des revendications 1 à 12, dans lequel la composition de caoutchouc contient au moins un polymère choisi dans le groupe constitué de polymères vinyliques aromatiques, de résines de pétrole et de résines terpéniques.

14. Pneu d'hiver selon l'une quelconque des revendications 1 à 13, dans lequel la composition de caoutchouc contient au moins un élément choisi dans le groupe constitué d'huiles et de polymères de farnesène liquides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2005148713 A1
- WO 2018079801 A1
- US 2019308451 A1
- EP 1463763 A1
- EP 3785928 A1
- JP 2009091482 A
- US 4414370 A
- JP S596207 A
- JP H558005 B
- JP H1313522 A
- US 5010166 A


### Non-patent literature cited in the description


- annual research report TREND. Toagosei Co., Ltd, 2000, vol. 3, 42-45